## Europäisches Patentamt
## European Patent Office
## Office européen des brevets

(19)

(11) Numéro de publication : **0 192 552**
**B1**

(12)

# FASCICULE DE BREVET EUROPÉEN

(45) Date de publication du fascicule du brevet :
**28.03.90**

(51) Int. Cl.⁵ : **B 64 G   3/00**, G 01 S   3/78,
G 02 B   7/00

(21) Numéro de dépôt : **86400264.7**

(22) Date de dépôt : **07.02.86**

(54) Dispositif de détection et de localisation de sources de lumière, utilisable sur vehicule spatial.

(30) Priorité : **08.02.85 FR 8501831**

(43) Date de publication de la demande :
**27.08.86 Bulletin 86/35**

(45) Mention de la délivrance du brevet :
**28.03.90 Bulletin 90/13**

(84) Etats contractants désignés :
**DE GB IT NL**

(73) Titulaire : **MATRA**
**4 rue de Presbourg**
**F-75116 Paris (FR)**

(72) Inventeur : **Tulet, Michel**
**147bis, Rue de Silly**
**F-92100 Boulogne Billancourt (FR)**

(74) Mandataire : **Fort, Jacques et al**
**CABINET PLASSERAUD 84, rue d'Amsterdam**
**F-75009 Paris (FR)**

(56) Documents cités :
**DE–A– 2 504 183**
**DE–A– 2 612 606**
**US–A– 3 253 150**
**US–A– 3 732 424**
**OPTICAL ENGINEERING, vol. 20, no. 1, janvier/février 1981, pages 135-142, Bellingham, Washington, US; P.M. SALOMON: "Charge-coupled device (CCD) trackers for high-accuracy guidance applications"**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 192 552 B1

## Description

L'invention a pour objet un dispositif de détection et de localisation de sources de lumière. Une application particulièrement importante est constituée par les dispositifs destinés à être montés sur véhicule spatial et permettant notamment, bien que non exclusivement, de détecter et de localiser des sources de lumière lointaine ponctuelles (ou de faible dimension) ayant une très faible intensité et éventuellement dispersées dans le champ objet. Des dispositifs de ce type sont notamment utilisés sur satellites pour l'observation d'objets stellaires. On peut également les envisager comme senseurs pour système de rendez-vous spatial. Ils peuvent notamment être du type comportant des éléments dioptriques de formation d'image sur une matrice, linéaire ou plus fréquemment à deux dimensions, de capteurs électro-optiques associée à une électronique de traitement.

Etant donné la quasi-impossibilité d'effectuer des réglages ou des réparations sur le dispositif une fois qu'un véhicule spatial qui le porte a été lancé, il est essentiel, d'une part, que des essais complets puissent être effectués au sol dans des conditions représentatives de celles qui sont rencontrées lors de la mission, d'autre part, que le dispositif n'exige aucun réglage consécutif aux modifications des conditions de fonctionnement, et notamment aux variations de température. Il est au surplus nécessaire de réduire le plus possible le poids et l'encombrement du dispositif.

Or, le dispositif de détection doit remplir des conditions extrêmement strictes pour donner des résultats satisfaisants. La mise au point géométrique doit être réalisée avec précision et maintenue en dépit des contraintes mécaniques et thermiques. L'électronique analogique directement associée au capteur doit être protégée contre les parasites électriques. La température de la matrice de capteurs doit être maintenue dans une plage étroite alors qu'il n'est pratiquement pas possible de réguler celle des organes de structure qui les supportent et que les fils de transmission des signaux constituent des ponts thermiques.

On connaît déjà (« Optical Engineering », Vol. 20, No. 1, janvier-février 1981, pp. 135-142) un détecteur d'étoile comportant des éléments dioptriques de formation d'image sur une matrice de capteurs électro-optiques placée dans un plan image proche du plan focal et associée à une électronique de traitement. Ce dispositif est conforme au préambule de la revendication 1.

On connaît par ailleurs (brevet U.S. 3 253 150) un détecteur à balayage d'horizon par miroirs tournants. Ce dispositif n'a pas non plus une constitution à proprement parler modulaire. Le brevet U.S. 3 732 424 décrit simplement un détecteur à réflecteur oscillant.

L'invention vise à fournir un dispositif remplissant au contraire les conditions exposées plus haut. Elle propose dans ce but un dispositif suivant la revendication 1.

Le corps tubulaire et les composants qu'il contient, c'est-à-dire la matrice (généralement une matrice de capteurs à transfert de charges, dits CTD, tels que ceux couramment dénommés CTD et CCD) et l'électronique qui lui est directement associée, constituent un module électro-optique manipulable en bloc. Du fait que ce module est fermé par le module optique qui le précède et le module électronique qui le suit, on améliore la stabilité mécanique par réduction du nombre d'interfaces et on réalise un gain notable de poids par rapport à un dispositif comportant trois modules complets. En particulier, le module électro-optique peut être fermé à l'avant par une lentille plan concave constituant le dernier élément dioptrique de sortie du module optique. Du fait qu'elle est proche du plan focal et que sa forme est plan-concave, la lentille de sortie permet de corriger la courbure du champ. Les liaisons entre l'électronique directement associée à la matrice (portée par un circuit imprimé en général) et le module électronique pourront être effectuées par l'intermédiaire de connecteurs étanches équipant le module électronique.

Le corps tubulaire peut aisément être équipé d'un raccord obturable permettant de le relier à une source de vide primaire en vue d'essayer le dispositif dans des conditions représentatives de celles qui seront rencontrées dans l'espace. Ce raccord peut être muni d'une soupape d'obturation commandée à distance ou automatiquement de façon à relier l'intérieur du corps tubulaire à l'ambiance soit immédiatement avant le tir, soit une fois le dispositif dans l'espace.

Il est nécessaire que les variations de température ne modifient la position relative de la matrice constituant le détecteur et du module optique ni axialement, ni transversalement à l'axe optique. Pour assurer le maintien en alignement (maintien transversal), la matrice peut être portée par la partie centrale d'un support plat dans lequel sont ménagées des fentes délimitant des ailes symétriques de réception de moyens de fixation sur le module optique. Ces fentes ont un double rôle : elles donnent au support plat la possibilité d'absorber des dilatations thermiques différentielles sans déplacement de la matrice par rapport à l'axe optique du module optique. Elles augmentent notablement le chemin thermique entre le corps du bloc optique et le détecteur lui-même. Les ailes seront maintenues par des pions solidaires du support de l'élément dioptrique de sortie. Quant au maintien le long de l'axe, il pourra comporter des moyens de fixation en trois points, répartis autour de l'axe optique, isolés thermiquement de la plaque par des manchons en matière plastique renforcée. Ces moyens assurent un maintien transversal (parallèlement à l'axe optique) et laissent une possibilité de déplacement dans le plan parallèle au plan de détection.

Le détecteur doit généralement être maintenu à température basse et régulée. Pour cela, on utilisera généralement un refroidisseur n'intervenant pas dans les liaisons mécaniques, utilisant l'effet thermoélectrique (effet Peltier), relié directement au corps tubulaire qui a une capacité thermique importante et permet d'évacuer un débit thermique élevé sans échauffement notable du « module » électro-optique.

L'invention sera mieux comprise à la lecture de la description qui suit d'un dispositif de détection et de localisation de sources stellaires constituant un mode d'exécution, donné à titre d'exemple non limitatif. La description se réfère aux dessins qui l'accompagnent, dans lesquels :

la Figure 1 est une représentation éclatée, en perspective, du dispositif de détection,

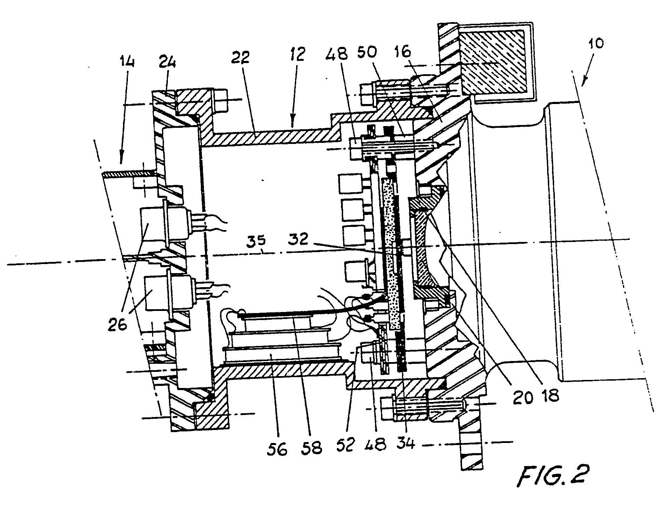

la Figure 2 est une vue en coupe, suivant l'axe, du module électro-optique du dispositif de la Figure 1,

la Figure 3 est une vue d'arrière du support de détecteur du module plan focal de la Figure 2,

la Figure 4 est une vue d'arrière montrant le montage du détecteur sur son support et l'emplacement des connexions.

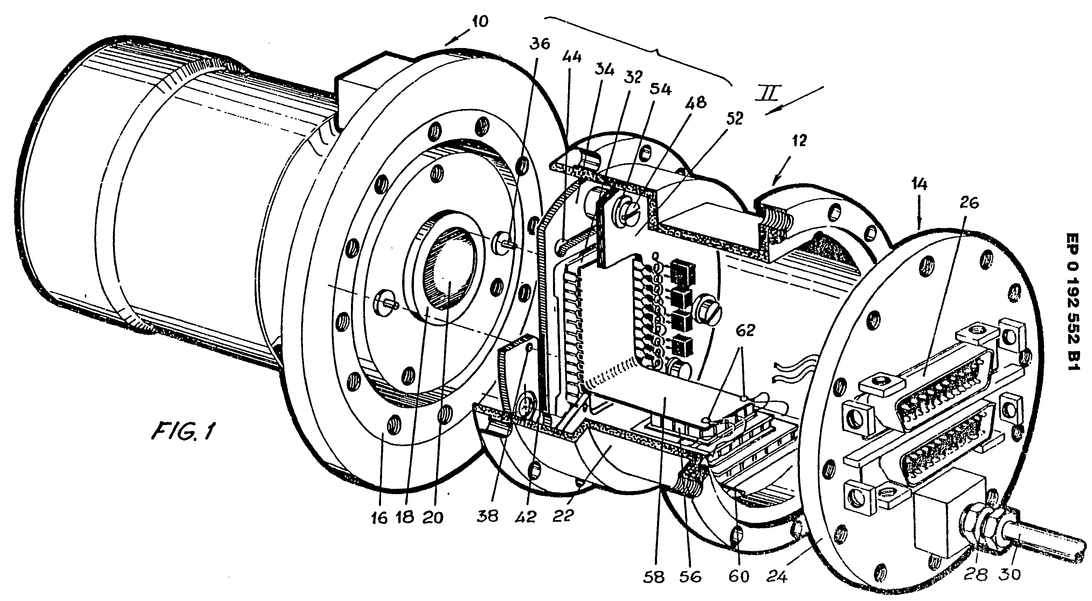

Le dispositif montré en Figure 1 peut être regardé comme comportant un bloc optique 10, un bloc électro-optique 12 et un bloc électronique 14 dont seule la face avant est montrée. Chacun de ces blocs comporte un boîtier et les boîtiers des trois blocs sont fixés l'un à l'autre de façon étanche.

La paroi arrière 16 du bloc optique 10 est percée en son centre d'une ouverture de réception du barillet 18 de la lentille de sortie 20 du bloc. Cette lentille sera généralement de forme plan concave, la face plane étant tournée vers le bloc électro-optique 12. Ce bloc optique fait fonction de couvercle avant pour le corps tubulaire 22 du boîtier du bloc 12. Le couvercle arrière du corps 22 est formé par la paroi avant 24 du bloc électronique 14, traversée par des connecteurs étanches 26 de raccordement. Par ces connecteurs s'effectuent les échanges de signaux électriques et la fourniture de la puissance électrique requise pour le fonctionnement du bloc électro-optique 12. Les étanchéités entre les parois 16 et 24 d'une part, le corps 22 d'autre part, peuvent être assurées de façon classique par des joints toriques en matière synthétique, par exemple en « VITON ». La paroi 24 porte également un queusot 28 débouchant à l'intérieur du boîtier du bloc 12 et muni, au moins pour les essais, d'une conduite 30 de raccordement à une source de vide. Lors de la mise en service du dispositif, cette conduite peut être remplacée par une vanne à commande automatique de mise en communication avec le vide ambiant lorsque le dispositif de détection est dans l'espace.

Le module électro-optique 12 contient un détecteur 32 constitué par une matrice à deux dimensions de CTD (CCD ou CIT). Le détecteur doit être placé de façon extrêmement précise, aussi bien le long de l'axe pour se trouver dans le plan focal que transversalement à l'axe. Il faut de plus que la position transversale et longitudinale du détecteur reste extrêmement stable.

Pour cela, le dispositif suivant l'invention réduit au minimum le nombre d'interfaces mécaniques entre le détecteur et le bloc optique 10 et donne aux matériaux de liaison une forme et une nature telles que les variations de différence de température entre le détecteur et son support (qui doivent être régulés) et les pièces de structure (à température très variable) ne provoquent pas de déplacement.

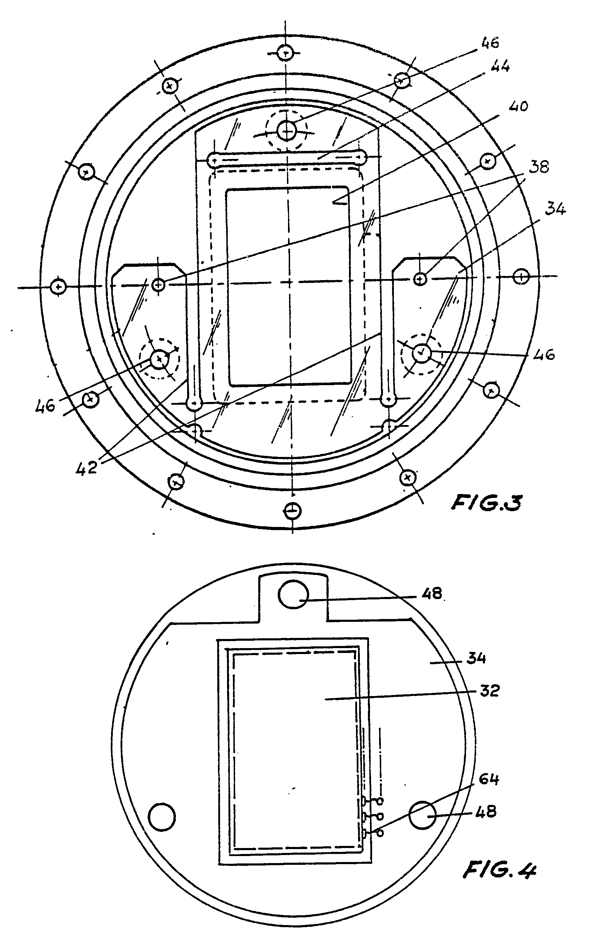

Dans ce but, le détecteur 32 est porté par un support 34 qui est directement fixé à la paroi arrière 16 du bloc optique 10. Le support 34 sera généralement réalisé en titane, qui a un coefficient de dilatation thermique proche de celui du verre et de l'alumine. Le support est positionné en utilisant comme référence l'axe 35 situé au milieu de l'intervalle entre deux trous ménagés dans la paroi 16. Dans ces trous sont emmanchés, lors du montage, deux pions 36 qui sont prévus pour s'engager également dans deux trous 38 percés dans le support 34 (Figure 3).

Le support 34 présente une ouverture centrale 40 permettant aux photons d'arriver sur le détecteur, collé sur la face arrière du support. Ce support, de forme plate, présente une découpe conçue pour remplir deux fonctions. D'une part, la découpe doit allonger les trajets d'écoulement de chaleur entre le détecteur et le boîtier. D'autre part, cette découpe doit autoriser les dilatations différentielles sans provoquer un décentrement du détecteur.

Les Figures 1 et 3 montrent deux fentes 42 délimitant dans le support des ailes symétriques dans lesquelles sont ménagés les trous 38 et qui sont prévues pour recevoir des moyens de fixation sur la paroi 16. Ces fentes donnent au support plat la possibilité d'absorber des dilatations thermiques différentielles sans déplacement du détecteur par rapport à l'axe optique du module. Les encoches, orthogonales à l'axe reliant les pions 36, absorbent en effet de façon symétrique les dilatations thermiques du boîtier du module optique 10, transmises par les pions de centrage. Une troisième fente 44, orthogonale aux précédentes, a notamment pour fonction d'allonger les trajets thermiques. Trois trous 46 percés dans le support 34 et régulièrement répartis autour de l'axe sont destinés à recevoir des vis 48 de fixation.

L'alignement du détecteur 32 dans le sens transversal (par rapport à l'axe optique 35) est assuré par les pions de centrage 36. Ces deux pions sont enfoncés à force dans deux trous ménagés dans deux manchons en matière plastique chargée, de faible conductibilité thermique. On peut notamment utiliser des manchons en polysulfone chargé de 30 % de verre, constituant ainsi un matériau rigide ayant une très mauvaise conductibilité électrique. Les manchons sont d'abord emmanchés à force dans la paroi 16 du bloc optique, puis percés pour assurer une bonne précision de positionnement.

Le détecteur est retenu dans le sens longitudinal (par rapport au plan focal) à l'aide des manchons étagé 50 enfilés sur les vis 48 et dont les longueurs sont déterminées en fonction des caractéristiques du bloc optique (longueur focale, ouverture, distance entre le plan focal et la face arrière du bloc optique) et des écarts de hauteur entre la surface sensible du détecteur et la face avant de la plaque support. Ces derniers écarts peuvent être mesurés une fois le détecteur collé sur la plaque support.

Les vis 48 assurent également, comme on le verra plus loin, le maintien d'un circuit imprimé 52 percé d'un trou central, sur lequel sont câblées les fonctions directement associées au détecteur. Ce circuit imprimé 52 est isolé des vis 48 par des rondelles 54 en polysulfone chargé.

Le détecteur 32 est muni d'un dispositif de refroidissement, représenté sous forme d'un refroidisseur peltier 56 à plusieurs étages. La face chaude du refroidisseur est brasée sur un méplat interne du corps 22. La liaison thermique avec le détecteur est constituée par au moins une lame d'argent 58 dont une extrémité est brasée sur la face froide du refroidisseur et l'autre est collée, à l'aide d'une colle thermiquement conductrice, sur la face arrière du détecteur 32. Le refroidisseur est alimenté en énergie électrique par des fils de fort calibre 60 provenant d'un des connecteurs 26. Des thermistances 62 collées sur la face froide du refroidisseur sont reliées par des fils fins à des connecteurs 26 de raccordement d'un circuit de régulation (non représenté). Une thermistance serait suffisante mais, dans la pratique, il est plus avantageux d'utiliser une des thermistances pour effectuer la mesure et l'autre pour contrôler la première.

Le circuit imprimé 52 déjà mentionné présente dans sa partie centrale une ouverture de passage des pattes du détecteur et la lame 58. Les liaisons électriques du détecteur avec le circuit imprimé sont avantageusement réalisées par des fils souples émaillés. La Figure 4 montre schématiquement deux de ces fils de liaison 64. Ces fils, ayant par exemple un diamètre de 0,16 mm, donc de faibles pertes thermiques, ont une extrémité enroulée et soudée sur une patte de détecteur, l'autre extrémité soudée sur des pastilles conductrices du circuit imprimé. Les liaisons électriques depuis le circuit imprimé jusqu'au connecteur 26 sont réalisées avec des fils de cuivre multi-brins de quelques centimètres de long, de faible section, n'impliquant que des écoulements thermiques faibles. Les fils peuvent être fixés mécaniquement au corps 22 sur leur trajet pour limiter les vibrations et améliorer la tenue mécanique.

## Revendications

1. Dispositif de détection et de localisation de sources de lumière comportant des éléments dioptriques de formation d'image sur une matrice de capteurs électro-optiques (32) placée dans un plan image desdits éléments, proche de leur plan focal et associée à une électronique de traitement, l'ensemble des éléments dioptriques étant regroupés dans un module optique (10) et ladite matrice (32) étant contenue dans un corps tubulaire (22), l'une des deux faces du corps étant placée contre le module optique, caractérisé en ce que le corps tubulaire est obturé de façon étanche, sur ladite face par l'élément dioptrique de sortie (20) du module optique (10) et, sur l'autre de ces faces, par un module électronique (14) contenant l'électronique de traitement du signal de sortie de la matrice.

2. Dispositif selon la revendication 1, caractérisé en ce que la matrice (32) est portée par la partie centrale d'un support plat dans (34) lequel sont ménagées des fentes (42) délimitant des ailes symétriques de réception de moyens de fixation (48) sur le module optique, lesdites fentes donnant au support plat la possibilité d'absorber des dilatations thermiques différentielles sans déplacement de la matrice par rapport à l'axe optique (35) du module optique.

3. Dispositif selon la revendication 2, caractérisé en ce que le support plat (34) présente également une fente (44) transversale aux fentes délimitant les ailes.

4. Dispositif selon la revendication 2 ou 3, caractérisé en ce que le support plat (34) est maintenu par rapport à l'axe du module optique (10) par des pions de centrage (36) emmanchés dans la paroi arrière (16) du module optique portant l'élément dioptrique de sortie (20), s'engageant dans des trous (38) des ailes et placés de façon que la ligne qui les relie passe par l'axe optique (35).

5. Dispositif selon l'une quelconque des revendications 2 à 4, caractérisé en ce que le support plat (34) est fixé à la paroi arrière (16) du module optique, portant l'élément dioptrique de sortie (20), par des vis (48) de maintien suivant la direction axiale des vis, les vis laissant subsister un jeu transversal et étant isolées thermiquement du support plat par des éléments (54) en matériau isolant.

6. Dispositif selon l'une quelconque des revendications précédentes, caractérisé en ce que le corps tubulaire (22) ou l'un des modules (10, 14) qui le ferment est muni de moyens (28) permettant de le raccorder à une source de vide et de le relier à l'ambiance.

7. Dispositif selon la revendication 1 ou 2, caractérisé en ce que ladite matrice (32) est constituée de capteurs à transfert de charges du type CCD et en ce que le corps tubulaire (22) contient également un circuit imprimé (52), le module électronique (14) étant muni de connecteurs étanches (26) de raccordement audit circuit.

8. Dispositif selon l'une quelconque des revendications précédentes, caractérisé en ce qu'il comporte un refroidisseur à effet Peltier (56), porté par le corps tubulaire (22), relié par une lame (58) en matériau bon conducteur à la face arrière de la matrice (32) et, par des fils d'alimentation électrique de faible section, à des connecteurs étanches de liaison avec le module électronique (14).

## Claims

1. Device for detecting and tracking light sources, comprising dioptric elements for imaging on an array of electro-optical sensors (32) placed in an image plane of said elements which is close to the focal plane thereof and associated with processing electronic means, the whole of the dioptric elements being assembled in an optical module (10) and said array (32) being contained in a tubular body (22), one of the two faces of the body being placed against the optical module, characterized in that the tubular body is sealingly closed, on said face, by the output dioptric element (20) of the optical module (10) and, on the other of its faces, by an electronic module (14) which contains the electronic means for processing the output signal of the array.

2. Device according to claim 1, characterized in that the array (32) is carried by the central part of a flat support (34) in which slots (42) are formed for defining symmetrical wings for receiving means (48) for connection on the optical module, said slots providing the flat support with a capability to absorb differential thermal expansions without movement of the array with respect to the optical axis (35) of the optical module.

3. Device according to claim 2, characterized in that the flat support (34) further has a slot (44) which is transversal to the slots which define the wings.

4. Device according to claim 2 or 3, characterized in that the flat support (34) is maintained with respect to the axis of the optical module (10) by centering plugs (36) engaged into the rear wall (16) of the optical module carrying the output dioptric element (20), engaging into openings (38) of the wings and so located that the line connecting them traverses the optical axis (35).

5. Device according to any one of claims 2-4, characterized in that the flat support (34) is secured to the rear wall (16) of the optical module, which carries the output dioptric element (20), by screws (48) for connection along the axial direction of the screws, said screws having a transversal clearance and being thermally insulated from the flat support by elements (54) of insulating material.

6. Device according to any one of the preceding claims, characterized in that the tubular body (22) or one of the modules (10, 14) which close it is provided with means (28) for connection to a vacuum source or to the ambient atmosphere.

7. Device according to claim 1 or 2, characterized in that said array (32) consists of CCD-type charge transfer sensors and in that the tubular body (22) further accommodates a printed circuit (52), the electronic module (14) being provided with sealed connectors (26) for connection to said circuit.

8. Device according to any one of the preceding claims, characterized in that it comprises a Peltier effect cooler (56), carried by the tubular body (22), connected by a strip (58) of a material having a good conductibility to the rear face of the array (32) and, via electric supply wires which have a low cross-section, to sealed connectors for connection with the electronic module (14).

## Patentansprüche

1. Vorrichtung zur Erkennung und Lokalisierung von Lichtquellen mit dioptischen Elementen zur Bildausbildung auf einer Matrix elektro-optischer Sensoren (32), welche in einer Bildebene der Elemente nahe ihrer Brennebene angeordnet und mit einer elektronischen Verarbeitung verbunden ist, wobei die Gesamtheit der dioptischen Elemente in einem optischen Modul (10) gruppiert ist, und die Matrix (32) in einem rohrförmigen Körper (22) enthalten ist, dessen eine von zwei Flächen neben dem optischen Modul angeordnet ist, dadurch gekennzeichnet, daß der rohrförmige Körper dicht verschlossen ist, auf der besagten Fläche durch ein dioptisches Ausgangselement (20) des optischen Moduls (10) und auf der anderen seiner Flächen durch ein elektronisches Modul (14), welche die Elektronik zur Verarbeitung des Ausgangssignals der Matrix enthält.

2. Vorrichtung nach Anspruch 1, dadurch gekennzeichnet, daß die Matrix (32) vom zentralen Bereich einer Stützplatte (34) getragen ist, in der Schlitze (42) ausgespart sind, welche symmetrische Flügel zur Aufnahme von Befestigungseinrichtungen (48) auf dem optischen Modul begrenzen, wobei die Schlitze der Stützplatte die Möglichkeit geben, differentielle thermische Dehnungen ohne Verschiebung der Matrix im Verhältnis zur optischen Achse (35) des optischen Moduls zu absorbieren.

3. Vorrichtung nach Anspruch 2, dadurch gekennzeichnet, daß die Stützplatte (34) außerdem einen Schlitz (44) quer zu den die Flügel begrenzenden Schlitzen aufweist.

4. Vorrichtung nach Anspruch 2 oder 3, dadurch gekennzeichnet, daß die Stützplatte (34) im Verhältnis zur Achse des optischen Moduls (10) durch Zentrierstifte (36) gehalten ist, welche in die hintere Oberfläche (16) des optischen Moduls eingesteckt sind, die das dioptische Ausgangselement (20) trägt, in Öffnungen (38) der Flügel eingreifen und derart angeordnet sind, daß die Verbindungslinie durch die optische Achse (35) geht.

5. Vorrichtung nach einem der Ansprüche 2 bis 4, dadurch gekennzeichnet, daß die Stützplatte (34) an der hinteren Oberfläche (16) des das dioptische Ausgangselement (20) tragenden optischen Moduls mittels Schrauben (48) fixiert ist, um in einer der Axialrichtung der Schrauben entsprechenden Richtung gehalten zu werden, wobei die Schrauben ein transversales Spiel zulassen und von der Stützplatte durch Elemente (54) aus isolierendem Material thermisch isoliert sind.

6. Vorrichtung nach einem der vorangehenden Ansprüche, dadurch gekennzeichnet, daß der rohrförmige Körper (22) oder einer der Module (10, 14), die diesen verschließen, mit Einrichtungen (28) versehen ist, die einen Anschluß an eine Vakuumquelle und eine Verbindung mit der Umgebung erlauben.

7. Vorrichtung nach Anspruch 1 oder 2, dadurch gekennzeichnet, daß die Matrix (32) von Sensoren zur Übertragung von Ladungen des Typs CCD gebildet ist, und daß der rohrförmige Körper (22) außerdem einen gedruckten Schaltkreis (52) aufweist, wobei das elektronische Modul (14) mit dichten Verbindern (26) zum Anschließen an den Schaltkreis versehen ist.

8. Vorrichtung nach einem der vorangehenden Ansprüche, dadurch gekennzeichnet, daß diese eine Kühleinrichtung (56) mit Peltier-Effekt aufweist, welche vom rohrförmigen Körper (22) getragen ist, mittels eines Armes (58) aus gut leitendem Material mit der hinteren Fläche der Matrix (32) und mittels elektrischer Speiseleitungen geringen Querschnitts mit den dichten Verbindern zur Verbindung mit dem elektronischen Modul (14) verbunden ist.

FIG.1

EP 0 192 552 B1

FIG.2

FIG.3

FIG.4